(19) **Europäisches Patentamt European Patent Office Office européen des brevets**

(11) **EP 1 737 165 B1**

(12) **EUROPEAN PATENT SPECIFICATION**

(45) Date of publication and mention
of the grant of the patent:
**24.11.2010 Bulletin 2010/47**

(51) Int Cl.:
*H04L 12/28* (2006.01)     *H04L 12/56* (2006.01)

(21) Application number: **06115506.5**

(22) Date of filing: **14.06.2006**

(54) **Modification of IEEE 802.11e EDCA admission control parameters**

Veränderung der IEEE 802.11e EDCA Zulassungssteuerungsparameter

Modification des paramètres de contrôle d'admission pour IEEE 802.11e EDCA

(84) Designated Contracting States:
**DE FI FR GB IT NL**

(30) Priority: **24.06.2005 KR 20050055252**

(43) Date of publication of application:
**27.12.2006 Bulletin 2006/52**

(73) Proprietor: **SAMSUNG ELECTRONICS CO., LTD.
Suwon-si,
Gyeonggi-do 442-742 (KR)**

(72) Inventors:
• **Yun, Nam-hyun
Seoul (KR)**
• **Sung, Min-young
Seongdong-gu,
Seoul (KR)**

(74) Representative: **Grootscholten, Johannes A.M.
Arnold & Siedsma
Sweelinckplein 1
2517 GK Den Haag (NL)**

(56) References cited:
• **SCARPA V ET AL: "Adaptive Techniques to Guarantee QoS in a IEEE 802.11 Wireless LAN" VEHICULAR TECHNOLOGY CONFERENCE, 2004. VTC 2004-SPRING. 2004 IEEE 59TH MILAN, ITALY 17-19 MAY 2004, PISCATAWAY, NJ, USA, IEEE, US, 17 May 2004 (2004-05-17), pages 3014-3018, XP010766803 ISBN: 0-7803-8255-2**
• **XIAO Y ET AL: "EVALUATION OF DISTRIBUTED ADMISSION CONTROL FOR THE IEEE 802.11E EDCA" IEEE COMMUNICATIONS MAGAZINE, IEEE SERVICE CENTER,NEW YORK, NY, US, vol. 42, no. 9, September 2004 (2004-09), pages S20-S24, XP001201026 ISSN: 0163-6804**
• **YI-WEN LAN ET AL: "Performance Enhancement of IEEE 802.1le EDCA by Contention Adaption" VEHICULAR TECHNOLOGY CONFERENCE, 2005. VTC 2005-SPRING. 2005 IEEE 61ST STOCKHOLM, SWEDEN 30-01 MAY 2005, PISCATAWAY, NJ, USA,IEEE, 30 May 2005 (2005-05-30), pages 2096-2100, XP010855796 ISBN: 0-7803-8887-9**

**Description**

The present invention relates to an apparatus and method for providing enhanced wireless communications, and more particularly to an apparatus and method capable of providing enhanced wireless communications by obtaining predetermined parameters using an experiment in a wireless network environment to decrease traffic backoffs in real-time or to increase traffic throughputs in non real-time, and by applying the obtained parameters to access points and stations.

Unlike in general wired LANs (IEEE 802.3 standard), a media access control (MAC) protocol of wireless LANs (IEEE 802.11 standard) often fails to sense collision during transmission. For this reason, wireless LANs in Ethernet-based networks typically employ a point coordination function (PCF) mode and a distributed coordination function (DCF) mode. The PCF mode prevents collision by allowing access points to poll each station to determine the availability of each station with respect to channel traffic, while the DCF mode prevents collision by using a random number. Here, the PCF mode can be implemented together with the DCF mode, as the IEEE 802.11 standard essentially adopts the DCF mode and selectively adopts the PCF mode.

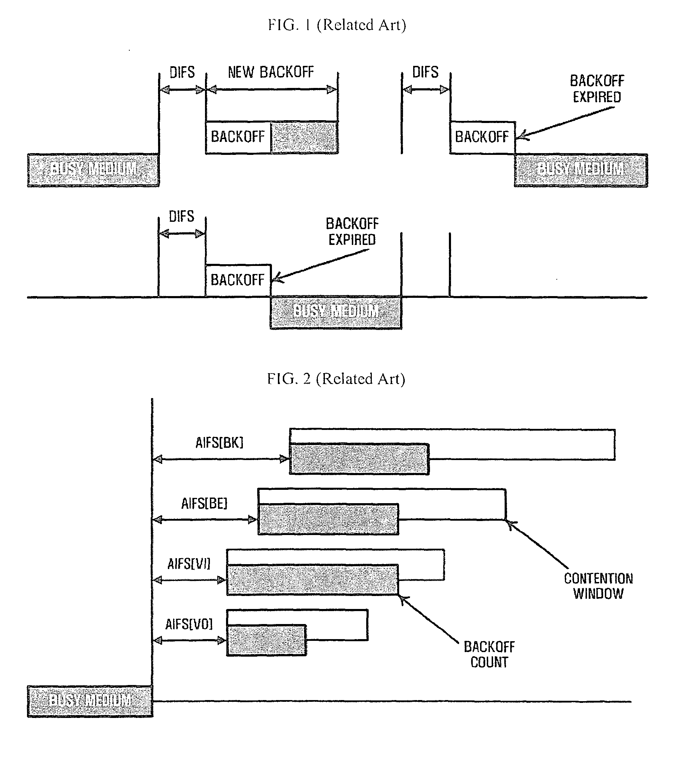

The DCF mode basically operates using carrier sense multiple access/collision avoidance (CSMA/CA). This allows each station to sense carrier waves to determine the idleness of a channel. Thus, collision can be avoided through a channel used in common among various stations during data transmission. To this end, the IEEE 802.11 standard has two standby time periods, i.e., distribute inter-frame space (DIFS) and back-off, as shown in Figure 1. The inter-frame space (IFS) is a time period required to determine the idleness of a channel. Control packets use IFS different from that of data packets. However, if all the stations transmit data packets directly after determining the idleness of a channel for DIFS, collision may occur. To avoid the collision, a back-off counter may be used. The back-off counter is selected by a certain value of 0 or the number of contention windows - 1, per data transmission through a station. If an idle time period longer than DIFS occurs, the back-off counter decreases by 1 per slot time while the channel is idle. If the back-off counter reaches 0, data transmission is initiated. If transmission failure such as collision occurs after transmitting data to a station, contention windows have values twice more than the existing values. A new back-off counter is set based on the values of the contention windows. The values of the contention windows can be defined by a minimum value and a maximum value. A value of an initial contention window is set as the minimum value and values of contention windows that have increased due to transmission failure are limited to a range less than the maximum value.

In a wireless network environment (IEEE 802.11), DIFS and the contention windows are defined equally for all the traffic. In this case, it is difficult to provide network services based on the types of traffic.

Figure 2 illustrates network services per priority under the IEEE 802.11e standard.

To provide network services appropriate for the types of traffic, the IEEE 802.11e standard classifies traffic into one or more access categories and defines an independent DIFS and an independent contention window per access category. This is referred to as an enhanced distributed channel access (EDCA) that expresses the existing DIFS as an arbitration inter-frame space (AIFS). Meanwhile, AIFS, a minimum contention window and a maximum contention window are referred to as EDCA parameters.

Access categories of EDCA under the IEEE 802.11e standard are classified into a background, best effort, video, and voice. Traffic transmission policies are determined referring to the EDCA parameters depending on the access categories of EDCA. The access categories of EDCA may also be classified into real-time access, such as voice and video, and non real-time access such as background and best effort.

Under the IEEE 802.11e standard, a recommended value for the EDCA parameters exists. However, a problem occurs in that the recommended value for the EDCA parameters is not the best parameter value in view of throughput.

Scarpa V et al: "Adaptive Techniques to Guarantee QoS in an IEEE 802.11 Wireless LAN", IEEE 59th Vehicular Technology Conference, Italy 17-19 May 2004, pages 3014-3018, XP010766803 discloses an adaptive technique to set MAC parameters via link adaptation to optimize QoS. When channel usage is greater than a maximum channel occupation threshold, the minimum contention window values are updated according to a backoff procedure. Values of minimum contention window are incremented for each specific access category, in order to increase traffic differentiation. The pre-characterising portions of the appended claims are based on this document.

The present invention addresses the above-mentioned problems in the prior art. An aspect of the present invention is to decrease traffic backoffs in real-time or increase traffic throughputs in non real-time by controlling EDCA parameters in an IEEE 802.11e wireless network environment.

Additional aspects of the invention will be set forth in part in the description which follows and in part will become apparent to those having ordinary skill in the art upon examination of the following or may be learned from practice of the invention.

According to the present invention there is provided an apparatus and method as set forth in the appended claims. Preferred features of the invention will be apparent from the dependent claims, and the description which follows.

The above and other aspects of the present invention will be more apparent from the following detailed description taken in conjunction with the accompanying drawings, in which:

Figure 1 is a view illustrating the operation of CSMA/CA under the IEEE 802.11 standard;

Figure 2 is a view illustrating network services per priority under the IEEE 802.11e standard;

Figure 3 is a block diagram illustrating an enhanced wireless communication system according to an exemplary embodiment of the present invention;

Figure 4 is a block diagram illustrating the construction of an apparatus for providing enhanced wireless communications according to an exemplary embodiment of the present invention;

Figure 5 is a block diagram illustrating the construction of an EDCA parameter extraction unit according to an exemplary embodiment of the present invention;

Figure 6 is a graph illustrating a Pareto curve according to experimental examples of the present invention;

Figure 7 is a flowchart illustrating a method of providing enhanced wireless communications according to an exemplary embodiment of the present invention; and

Figure 8 is a flowchart illustrating a method of extracting EDCA parameters according to an exemplary embodiment of the present invention.

Hereinafter, exemplary embodiments of the present invention will be described in detail with reference to the accompanying drawings. The aspects of the present invention and methods for achieving the aspects will be apparent by referring to the exemplary embodiments to be described in detail with reference to the accompanying drawings. However, the present invention is not limited to the exemplary embodiments disclosed hereinafter, but can be implemented in various forms. The matters defined in the description, such as the detailed construction and elements are specific details provided to assist those having ordinary skill in the art in a comprehensive understanding of the invention. In the whole description of the present invention, the same reference numerals are used for the same or like elements across various figures.

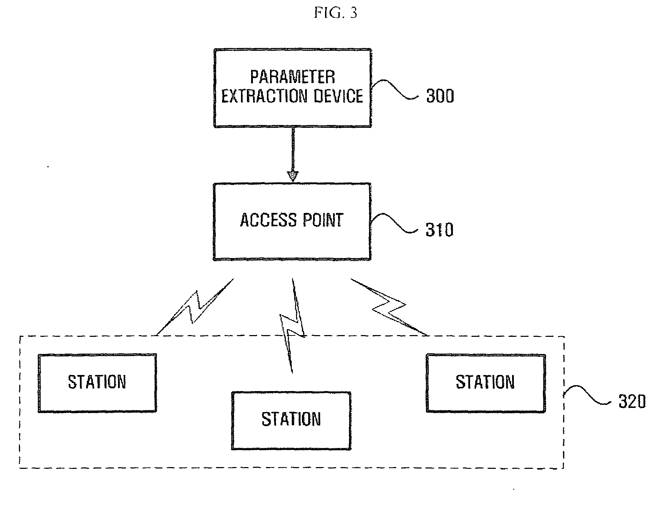

Figure 3 is a view illustrating an enhanced wireless communication system according to an exemplary embodiment of the present invention. Referring to Figure 3, the enhanced wireless communication system includes a parameter extraction device 300, access points 310 and a station 320.

The parameter extraction device 300 serves to extract EDCA parameters to optimize communications of each station under an arbitrary network environment. That is, the parameter extraction device 300 extracts EDCA parameters to decrease traffic backoffs in real-time or increase traffic throughputs in non real-time.

The parameter extraction device 300 receives predetermined traffic information from a user or a separate apparatus to extract EDCA parameters and generates a simulation station depending on the received traffic information. Then, the parameter extraction device 300 extracts EDCA parameters to optimize the traffic generated by the simulation station.

The traffic information includes at least one of various kinds of loads (hereinafter, referred to as "real-time traffic load") generated by a number of stations per access category and real-time station. The access category is classified into background, best effort, video and voice. The background and the best effort categories are replaced with non real-time since there is no significant difference between them.

The EDCA parameters may be used later during experiments. The parameter extraction device 300 selects temporary EDCA parameters referring to the result of a preceding experiment and applies the selected temporary EDCA parameters to the simulation station to extract optimized EDCA parameters. This procedure may be repeatedly performed, and the results extracted by the repeated implementation are updated and stored.

The EDCA parameters extracted by the parameter extraction device 300 are stored in the access point 310 to correspond to corresponding traffic information. The access point 310 serves to optimize communications of each station by actually applying the EDCA parameter selected from the stored EDCA parameters to each station.

The access point 310 includes the optimized EDCA parameter among results of simulations performed by the parameter extraction device 300 in a beacon packet and transmits the optimized EDCA parameter to each station 320. The station 320 uses the network based on the received EDCA parameter. At this time, the access point 310 receives a traffic detail packet from a real-time station that generates traffic in real-time or receives an arbitrary packet from a non-real-time station that generates traffic in non real-time. Thus, the access point 310 can retrieve a new EDCA parameter depending on the connection of a new station 320, disconnection of the existing station 320, or conversion of an access category in the existing station 320 and can transmit the retrieved EDCA parameter to each station 320.

The EDCA parameters are information required for the station 320 to connect to a wireless network having quality of service (QoS) and include parameter values defined to give different priority to four access categories, i.e., background, best effort, video and voice. That is, each station 320 receives the EDCA parameters from the access point 310 and transmits data depending on the EDCA parameter corresponding to access the category of data to be transmitted.

However, since there is no substantial need to distinguish best effort from background, the best effort and the background are referred to as non real-time in an exemplary embodiment of the present invention. Thus, it is supposed that the best effort and the background use the same EDCA parameter. That is, access categories in an exemplary embodiment of the present invention include non real-time, video and voice.

Examples of parameters for each access category include AIFS, a minimum contention window, and a maximum contention window.

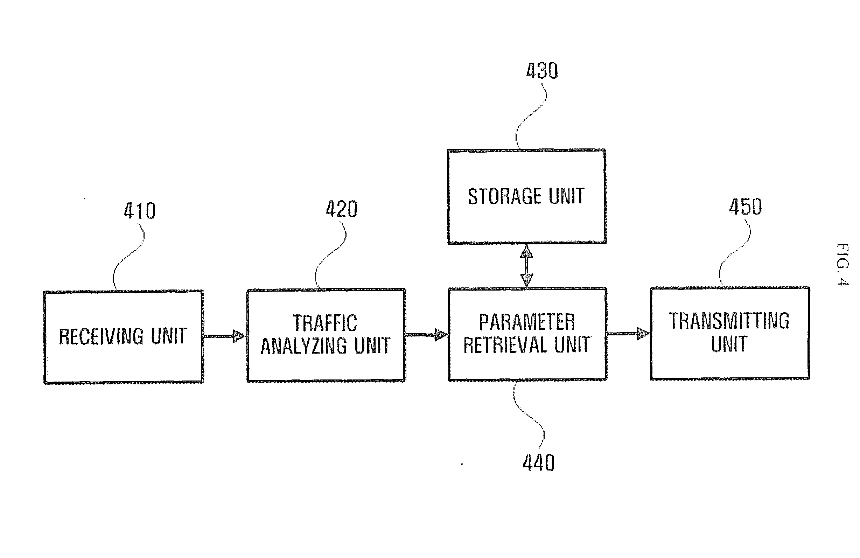

Figure 4 is a block diagram illustrating the construction of an apparatus for providing enhanced wireless communications according to an exemplary embodiment of the present invention. Referring to Figure 4, the apparatus (hereinafter, referred to as "access point") includes a receiving unit 410, a storage unit 430, a traffic analyzing unit 420, a parameter retrieval unit 440, and a transmitting unit 450.

The storage unit 430 serves to store the EDCA parameters to decrease the traffic backoffs in real-time or increase the traffic throughputs in non real-time. The EDCA parameters stored in the storage unit 430 are information obtained by experiments. Since the EDCA parameters depend on traffic information used for the experiments, they may be updated as more efficient values obtained by additional experiments. Hereinafter, the traffic information corresponding to the EDCA parameters stored in the storage unit 430 is referred to as retrieval information.

Meanwhile, since wireless communications depend on the number of stations per access category, experiments by combination of all the stations are required. However, such experiments cannot be actually implemented, experiments can be implemented by an arbitrary value for the number of stations. That is, a user who implements a simulation can arbitrarily determine the number of stations connected to a network, such as 1, 2, 5, 10, 20 and 50. The user can implement the simulation by properly increasing or decreasing the number of stations.

Furthermore, wireless communications may depend on a traffic load in real-time. Thus, the user who implements the simulation can arbitrarily select a traffic load in real-time like the number of stations connected to a network.

Finally, wireless communications defined in an exemplary embodiment of the present invention can be determined by the number of stations per access category and a traffic load in real-time.

It is assumed that, during experiments, the traffic load in real-time is uniformly generated by all the real-time stations and a packet queue of the non-real-time station is filled with packets. Thus, the EDCA parameter used for the worst network environment can be extracted.

Furthermore, experiments by parameters that do not conform to the following ECDA parameter conditions under the IEEE 802.11e standard may be excluded;

$$\text{AIFS}[AC_i] \geq \text{AFIS}[AC_j], \ 0 \leq i < j \leq 3$$

$$\text{CW}_{\min}[AC_i] \geq \text{CW}_{\min}[AC_j], \ 0 \leq i < j \leq 3$$

$$\text{CW}_{\max}[AC_i] \geq \text{CW}_{\max}[AC_j], \ 0 \leq i < j \leq 3$$

$$\text{CW}_{\min}[AC] > \text{CW}_{\max}[AC]$$

wherein, AIFS represents an arbitrary inter-frame space, $CW_{\min}$ represents a minimum contention window, $CW_{\max}$ represents a maximum contention window, AC represents access category, and $AC_0$, $AC_1$ $AC_2$, and $AC_3$ respectively represent background, best effort, video and voice. In an exemplary embodiment of the present invention, since a non-real-time access category representing background and best effort is used, $AC_0$ and $AC_1$ are regarded as one access category.

Furthermore, AIFS in voice traffic is fixed at 2. This is to avoid collision between voice traffic and other traffics as AIFS in voice traffic is similar to AIFS in other traffics if AIFS in voice traffic increases. The above conditions are based on AIFS in voice traffic having a minimum value of 2 under the IEEE 802.11e standard.

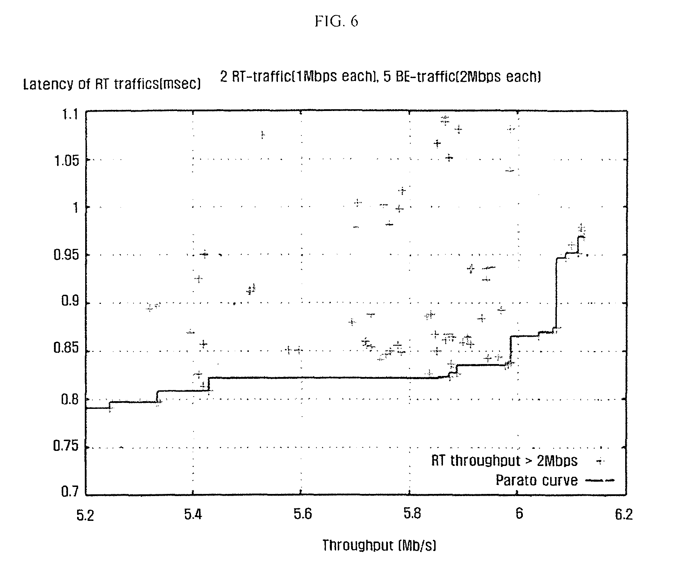

The experiment results according to the above conditions are illustrated in a three-dimensional curve based on the traffic throughputs in non real-time, the back-off of video traffic and the back-off of voice traffic. The experiment results considering only traffic in non-real-time and video traffic are illustrated in a Pareto curve as shown in Figure 6. Dots in a graph shown in Figure 6 according the experiment results of an exemplary embodiment of the present invention represent specific results obtained by controlling the number of stations per access category and a traffic load in real-time and arbitrarily inputting values of the EDCA parameters. That is, Figure 6 illustrates a graph in the case of a transmission rate per time of 1Mbps through two real-time stations and a transmission rate per time of 2Mbps through five non-real-time stations in a state that access categories are simplified by real-time traffic (video) and non-real-time traffic. Referring to Figure 6, a vertical axis represents the traffic backoffs in real-time and a horizontal axis represents the traffic throughputs in non real-time. Since it is possible to provide enhanced wireless communications in the case where the traffic backoffs in real-time is low and the traffic throughputs in non real-time increase, it is noted that a solid line of Figure 6 is optimally set. Therefore, setting results at each dot overlapped with the solid line are stored in the storage unit 430. The setting results may depend on the number of stations per access category and a traffic load in real-time. Therefore, additional experiments can be implemented by conversion of each value. As a result, more efficient results obtained by the additional experiments can be updated and stored in the storage unit 430.

For reference, Figure 6 illustrates the experiment results obtained after supposing that access categories include real-time traffic (video) and non-real-time traffic. For application of the experiment results of Figure 6 to an actual network, it is preferably, but not necessarily, required that experiments for three access categories be performed.

If it is obviously predicted that results less efficient than the results of the preceding experiments are obtained by additional experiments, the additional experiments may not be implemented. That is, even if the traffic throughputs in real-time are smaller than or equal to a traffic load in real-time, settings that are not included in a Pareto curve may be excluded from the experiments. Such setting conditions are listed as follows, wherein $AC_j$ represents a priority relatively higher than that of $AC_i$ and other parameters that are not mentioned are to be equally set.

Condition 1: if AIFS of $AC_i$ decreases, collision probability between $AC_j$ traffic and $AC_i$ traffic increases. Thus, since the throughput of $AC_j$ traffic does not increase, an experiment that decreases AIFS of $AC_i$ to increase the throughput of $AC_j$ traffic may not be performed.

Condition 2: if the value of the minimum contention window of $AC_i$ decreases, collision probability between $AC_j$ traffic and $AC_i$ traffic increases. Thus, since the throughput of $AC_j$ traffic does not increase, an experiment that decreases the minimum contention window of $AC_i$ to increase the throughput of $AC_j$ traffic may not be performed.

Condition 3: if the value of the maximum contention window of $AC_i$ decreases, collision probability between $AC_j$ traffic and $AC_i$ traffic increases. Thus, since the throughput of $AC_j$ traffic does not increase, an experiment that decreases the maximum contention window of $AC_i$ to increase the throughput of $AC_j$ traffic may not be performed.

Condition 4: if AIFS of $AC_i$ is greater than a sum of AIFS of $AC_j$ and the maximum contention window of $AC_j$, a packet by an $AC_j$ station has a priority over a packet by an $AC_i$ station so as to provide effective network environment. At this time, if AIFS of $AC_i$ is excessively large, the back-off of $AC_i$ traffic increases. For this reason, since the throughput decreases, it is effective that AIFS of $AC_i$ is small. Therefore, an additional experiment by a value greater than AIFS of prior $AC_i$ may not be performed.

Condition 5: if traffic of a specific access category does not exist in a network, an EDCA parameter for such traffic does not affect the experiment. Therefore, the EDCA parameter for such traffic is fixed at an arbitrary value and an experiment is performed by controlling only the EDCA parameter for traffic that exists in the network.

The receiving unit 410 serves to receive a traffic detail packet from the real-time station or receive an arbitrary packet from the non-real-time station. The received packet is transmitted to the traffic analyzing unit 420.

The traffic analyzing unit 420 analyzes traffic by referring to the packet transmitted from the receiving unit 410. That is, the traffic analyzing unit 420 identifies the number of stations per access category and a traffic load in real-time. More specifically, the traffic analyzing unit 420 identifies the number of stations per access category and a traffic load in real-time using access categories included in the traffic detail packet and a transmission rate per time period. Meanwhile, the non-real-time station does not transmit the traffic detail packet. If the packet transmitted from the receiving unit 410 is an arbitrary packet, not the traffic detail packet, it is determined to be an arbitrary packet, by the non-real-time station.

The traffic backoffs in non real-time are not essential to the user. That is, in the case of data such as a document, the back-off of an inter-frame may be disregarded by the user. However, the total required time period may be essential to the user. Therefore, the traffic backoffs in non real-time is determined based on the throughput per unit time period.

Meanwhile, in the case of traffic in real-time, the throughput per unit time period and the back-off of inter-frame are essential to the user. Particularly, in the case of voice, the back-off of inter-frame may be fatal in understanding a voice transmission. Therefore, the traffic backoffs in real-time are determined based on the throughput per unit time period having been completely processed.

The information identified by the traffic analyzing unit 420 is transmitted to the parameter retrieval unit 440. The parameter retrieval unit 440 retrieves the EDCA parameter from the storage unit 430, to decrease the traffic backoffs in real-time or increase the traffic throughputs in non real-time by using the traffic information transmitted from the traffic analyzing unit 420. That is, the parameter retrieval unit 440 compares the transmitted traffic information with retrieval information stored in the storage unit 430 to extract equal or similar retrieval information and extracts the EDCA parameter corresponding to the extracted retrieval information.

At this time, the parameter retrieval unit 440 may extract the basic EDCA parameter previously stored in the storage unit 430. For example, if no retrieval information equal to or most approximate to the traffic information, i.e., the number of stations per access category and a traffic load in real-time, exists, the parameter retrieval unit 440 extracts the basic EDCA parameter previously stored in the storage unit 430. That is, if the retrieval information equal or similar to the traffic information exists, the parameter retrieval unit 440 transmits the EDCA parameter corresponding to the retrieval information to the transmitting unit 450. If no retrieval information equal or similar to the traffic information exists, the parameter retrieval unit 440 transmits the basic EDCA parameter to the transmitting unit 450.

The traffic information and the retrieval information may have equal or similar values to each other. In this case, the similar values can be selected arbitrarily by the user. The similar values mean that the difference between values is less than 5%.

In detail, it is assumed that there is previously stored retrieval information such that the number of stations per access category is 30 and the traffic load of traffic in real-time is 100MB. In this case, if there is retrieved traffic information such that the number of stations per access category is 29 and the traffic load of traffic in real-time is 101MB, it is determined that the previously stored retrieval information is similar to the retrieved traffic information. Thus, the EDCA parameter corresponding to the stored retrieval information is extracted.

The transmitting unit 450 serves to transmit the EDCA parameter transmitted from the parameter retrieval unit 440 to the station connected to the network. At this time, the EDCA parameter may be transmitted in a state that it is included in the beacon packet.

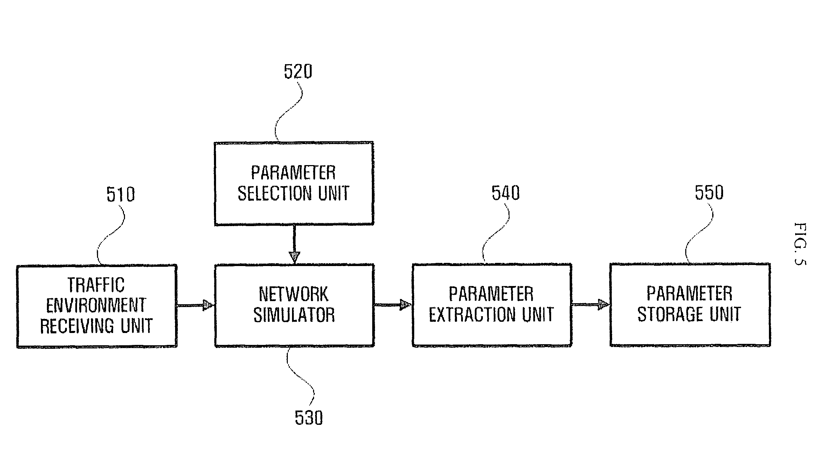

Figure 5 is a block diagram illustrating the construction of an apparatus for extracting EDCA parameters according to an exemplary embodiment of the present invention. Referring to FIG. 5, the apparatus includes a traffic environment receiving unit 510, a parameter selection unit 520, a network simulator 530, a parameter extraction unit 540, and a parameter storage unit 550.

The traffic environment receiving unit 510 receives information (traffic information) including at least one of the number of stations per access category and a traffic load in real-time. That is, the user is required to input traffic to be tested. The traffic may automatically be generated by a separate apparatus. The received information is transmitted to the network simulator 530.

The parameter selection unit 520 serves to select temporary EDCA parameters, which are consistent with a predetermined condition, from the total EDCA parameters. The parameter selection unit 520 selects temporary EDCA parameters that are likely to decrease the traffic backoffs in real-time or increase the traffic throughputs in non real-time. That is, the parameter selection unit 520 does not select temporary EDCA parameters that obviously fail to decrease the traffic backoffs in real-time and increase the traffic throughputs in non real-time.

The network simulator 530 generates a plurality of simulation stations that will transmit data corresponding to the traffic information received by the traffic environment receiving unit 510, and determines communication throughput by applying the temporary EDCA parameters selected by the parameter selection unit 520 to the simulation stations. That is, the network simulator 530 generates the traffic backoffs in real-time (voice and video) and the traffic throughputs in non real-time in the case where the selected temporary EDCA parameters are applied to the plurality of simulation stations.

A three-dimensional graph can be formed based on the traffic throughputs in non real-time, the back-off of video and the back-off of voice in accordance with the generated result of the network simulator 530. A value corresponding to the graph may be converted to a table, and the converted table may be stored. That is, the optimized EDCA parameter corresponding to the number of stations per access category and a traffic load of traffic in real-time can be stored in a type of table.

The parameter extraction unit 540 extracts the temporary EDCA parameters to decrease the traffic backoffs in real-time or increase the traffic throughputs in non real-time by referring to the results of the simulation generated by the network simulator. That is, the parameter extraction unit 540 extracts only the EDCA parameters, which provide enhanced wireless communications, from the temporary EDCA parameters selected by the parameter selection unit 520.

The parameter storage unit 550 stores the EDCA parameters extracted by the parameter extraction unit 540. The EDCA parameters stored in the parameter storage unit 550 can be transmitted to the access point 310 through a separate communication means. The access point 310 transmits the EDCA parameters to the actual station to provide enhanced wireless communications.

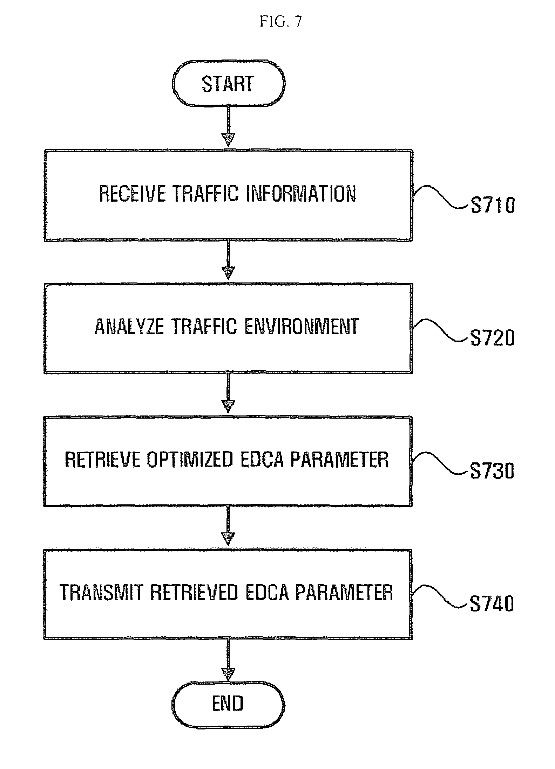

Figure 7 is a flowchart illustrating a method of providing enhanced wireless communications according to an exemplary embodiment of the present invention.

The receiving unit 410 receives the packet including the traffic information from each station connected to the network S710. That is, the receiving unit 410 receives the packet including the number of stations per access category and information for generating a traffic load in real-time. Specifically, the receiving unit 410 receives a traffic detail packet related to receiving traffic information in real-time. Also, the receiving unit 410 receives an arbitrary packet related to receiving traffic information in non real-time. The traffic detail packet includes access categories of data and a traffic load in real-time.

The received packet is transmitted to the traffic analyzing unit 420. The traffic analyzing unit 420 analyzes traffic referring the transmitted packet S720. That is, the traffic analyzing unit 420 identifies the number of real-time stations per access category and a traffic load in real-time using the transmission rate per time period and the access categories included in the traffic detail packet, and identifies the number of non-real-time stations.

The identified traffic information is transmitted to the parameter retrieval unit 440. The parameter retrieval unit 440 retrieves whether the retrieval information stored in the storage unit 430 includes information equal or similar to the transmitted traffic information. Thus, if the retrieval information stored in the storage unit 430 includes information equal or similar to the transmitted traffic information, the parameter retrieval unit 440 extracts the EDCA parameter corresponding to the retrieved information. If the retrieval information stored in the storage unit 430 does not include information equal or similar to the transmitted traffic information, the parameter retrieval unit 440 extracts the previously stored basic EDCA parameter S730.

The EDCA parameter extracted by the parameter retrieval unit 440 is transmitted to the transmitting unit 450, and the transmitting unit 450 transmits the EDCA parameter to each station connected to the network S740.

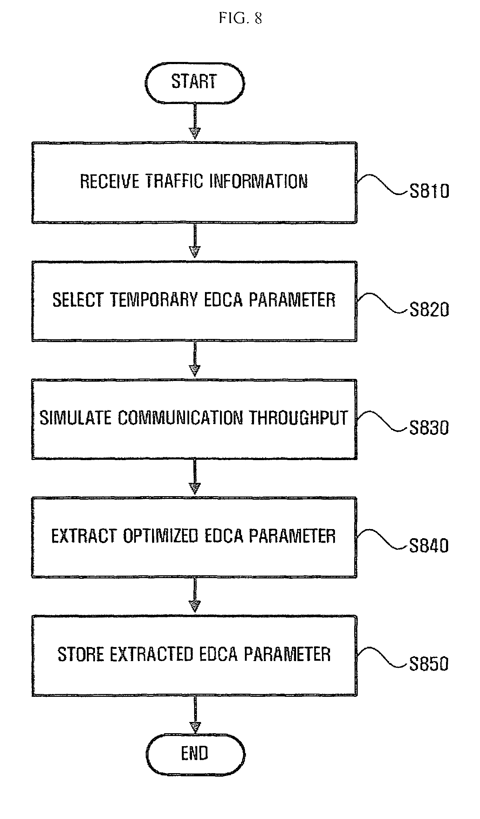

Figure 8 is a flowchart illustrating a method of extracting EDCA parameters according to an exemplary embodiment of the present invention.

The traffic environment receiving unit 510 receives the traffic information including the number of stations per access category and a traffic load in real-time S810. The received information is transmitted to the network simulator 530. The network simulator 530 generates a simulation station corresponding to the transmitted information. That is, the network simulator 530 generates a virtual station using software. A real station for implementing a function of the simulation station may also be used. The user can arbitrarily input at least one of the number of real-time stations, the number of non-real-time stations, and the traffic load in real-time.

The parameter selection unit 520 selects the temporary EDCA parameters according to a predetermined condition from the total EDCA parameters S820.

As mentioned above, the predetermined condition means that the EDCA parameters that do not conform to the EDCA parameters under the IEEE 802.11e standard are excluded.

Further, the parameter selection unit 520 does not select the temporary EDCA parameters that obviously fail to decrease the traffic backoffs in real-time and increase the traffic throughputs in non real-time.

The temporary EDCA parameters selected by the parameter selection unit 520 are transmitted to the network simulator 530. The network simulator 530 simulates communication throughput by applying the temporary EDCA parameters to the simulation stations S830.

The simulation by the network simulator 530 may be implemented by a separate apparatus to enhance experimental throughput.

The simulation results may be stored in the parameter storage unit 550 or may temporarily be stored in a separate storage unit. The parameter extraction unit 540 extracts the EDCA parameters, which decrease the traffic backoffs in real-time or increase the traffic throughputs in non-real-time, from the temporary EDCA parameters, referring to the simulation results S840.

The EDCA parameters extracted by the parameter extraction unit 540 are stored in the parameter storage unit 550 S850.

As described above, the apparatus and method for providing enhanced wireless communications have the following advantages.

First, since the EDCA parameters that decrease the traffic backoffs in real-time or increase the traffic throughputs in non real-time in an IEEE 802.11e wireless network environment are used, it is possible to provide enhanced wireless communications.

In addition, since the EDCA parameters are dynamically controlled, it is possible to control the relationship between the traffic backoffs in real-time and the traffic throughputs in non real-time.

Although a few preferred embodiments have been shown and described, it will be appreciated by those skilled in the art that various changes and modifications might be made without departing from the scope of the invention, as defined in the appended claims.

**Claims**

1. An apparatus for providing enhanced wireless communications, the apparatus **characterised by**:

a storage unit (430) arranged to store enhanced distributed channel access (EDCA) parameters and predetermined retrieval information corresponding to the EDCA parameters;
a receiving unit (410) arranged to receive information including at least one of access categories of data to be transmitted from each station (320) connected to a network and a traffic load in real-time;
a parameter retrieval unit (440) arranged to retrieve EDCA parameters corresponding to retrieval information selected by referring to the received information; and
a transmitting unit (450) arranged to transmit the retrieved EDCA parameters to at least one station (320) connected to the wireless network.

2. The apparatus as claimed in claim 1, wherein the traffic in real-time includes at least one of video traffic and voice traffic.

3. The apparatus as claimed in claim 1 or 2, wherein the traffic in non real-time includes at least one of background traffic and best effort traffic.

4. The apparatus as claimed in claim 1, 2 or 3, wherein the retrieval information includes at least one of the number of stations (320) per access category and a traffic load in real-time.

5. The apparatus as claimed in claim 4, wherein the access category includes at least one of non-real-time, video and voice.

6. The apparatus as claimed in any preceding claim, wherein the EDCA parameters include at least one of an arbitrary inter-frame space (AIFS) per access category, a minimum contention window, and a maximum contention window.

7. The apparatus as claimed in claim 6, wherein the EDCA parameters are obtained by an experiment that modifies at least one of the AIFS per access category, the minimum contention window, and the maximum contention window.

8. The apparatus as claimed in any preceding claim, wherein the parameter retrieval unit (440) retrieves basic EDCA parameters stored in the storage unit (430) if there are no EDCA parameters corresponding to the retrieval information selected by referring to the received information.

9. An apparatus for providing enhanced wireless communications, the apparatus **characterised by**:

a traffic information receiving unit (510) arranged to receive information including at least one of a number of stations (320) per access category and a traffic load in real-time;
a parameter selection unit (520) arranged to select temporary enhanced distributed channel access (EDCA) parameters;
a network simulator (530) arranged to generate simulation stations that will generate traffic corresponding to the received information and simulate communication throughput of the simulation stations by applying the selected temporary EDCA parameters to the simulation stations;
a parameter extraction unit (540) arranged to extract EDCA parameters from the selected temporary EDCA parameters by referring to the simulation results; and
a parameter storage unit (550) arranged to store the extracted EDCA parameters.

10. The apparatus as claimed in claim 9, wherein the temporary EDCA parameters and the EDCA parameters include at least one of an arbitration inter-frame space (AIFS) per access category, a minimum contention window, and a maximum contention window.

11. A method of providing enhanced wireless communications, the method **characterised by**:

storing enhanced distribution channel access (EDCA) parameters and predetermined traffic information corresponding to the EDCA parameters;
receiving information including at least one of access categories of data to be transmitted from each station (320) connected to a network and a traffic load in real-time;
retrieving enhanced distributed channel access (EDCA) parameters corresponding to retrieval information selected by referring to the received information; and
transmitting the retrieved EDCA parameters to at least one station (320) connected to the wireless network.

12. The method as claimed in claim 11, wherein the traffic in real-time includes at least one of video traffic and voice traffic.

13. The method as claimed in claim 11 or 12, wherein the traffic in non real-time includes at least one of background traffic and best effort traffic.

14. The method as claimed in claim 11, 12 or 13, wherein the retrieval information includes at least one of the number of stations (320) per access category and a traffic load in real-time.

15. The method as claimed in claim 14, wherein the access category includes at least one of non real-time, video and voice.

16. The method as claimed in any of claims 11 to 15, wherein the EDCA parameters include at least one of an arbitration inter-frame space (AIFS) per access category, a minimum contention window, and a maximum contention window.

17. The method as claimed in claim 16, wherein the EDCA parameters are obtained by using an experiment that modifies at least one of the AIFS per access category, the minimum contention window, and the maximum contention window.

18. The method as claimed in any of claims 11 to 17, wherein said retrieving the EDCA parameters includes retrieving stored EDCA parameters if there are no EDCA parameters corresponding to the retrieval information selected by referring to the received information.

19. A method of providing enhanced wireless communications, **characterised by**:

   receiving information including at least one of a number of stations (320) per access category and a traffic load in real-time;
   selecting temporary enhanced distributed channel access (EDCA) parameters;
   generating simulation stations that will generate traffic corresponding to the received information and simulating communication throughput of the simulation stations by applying the selected temporary EDCA parameters to the simulation stations, to obtain simulation results;
   extracting EDCA parameters from the selected temporary EDCA parameters by referring to the simulation results; and storing the extracted EDCA parameters.

20. The method as claimed in claim 19, wherein the temporary EDCA parameters and the EDCA parameters include at least one of an arbitration inter-frame space (AIFS) per access category, a minimum contention window, and a maximum contention window.

**Patentansprüche**

1. Vorrichtung zur Bereitstellung verbesserter drahtloser Kommunikationen, wobei die Vorrichtung **gekennzeichnet ist durch**:

   eine Speichereinheit (430), eingerichtet zum Speichern von EDCA-(Enhanced Distributed Channel Access)-Parametern und vorgegebenen Abrufinformationen, die den EDCA-Parametern entsprechen;
   eine Empfangseinheit (410), eingerichtet zum Empfangen von Informationen, die zumindest entweder Zugriffskategorien von Daten, die aus jeder mit einem Netzwerk verbundenen Station (320) zu senden sind, oder eine Verkehrslast in Echtzeit beinhalten;
   eine Parameterabrufeinheit (440), eingerichtet zum Abrufen von EDCA-Parametern, welche **durch** Bezugnehmen auf die empfangenen Informationen ausgewählten Abrufinformationen entsprechen; und
   eine Sendeeinheit (450), eingerichtet zum Senden der abgerufenen EDCA-Parameter an zumindest eine Station (320), die mit dem drahtlosen Netzwerk verbunden ist.

2. Vorrichtung nach Anspruch 1, wobei der Verkehr in Echtzeit zumindest entweder Videoverkehr oder Sprachverkehr beinhaltet.

3. Vorrichtung nach Anspruch 1 oder 2, wobei der Verkehr in Nicht-Echtzeit zumindest entweder Hintergrundverkehr oder Verkehr nach bester Möglichkeit (best effort) beinhaltet.

4. Vorrichtung nach Anspruch 1, 2 oder 3, wobei die Abrufinformationen zumindest entweder die Anzahl an Stationen (320) pro Zugriffskategorie oder eine Verkehrslast in Echtzeit beinhalten.

5. Vorrichtung nach Anspruch 4, wobei die Zugriffskategorie zumindest entweder Nicht-Echtzeit oder Video oder Sprache beinhaltet.

**6.** Vorrichtung nach einem der vorstehenden Ansprüche, wobei die EDCA-Parameter zumindest entweder einen Arbitrary Inter-Frame Space (AIFS) pro Zugriffskategorie oder ein minimales Wettbewerbsfenster oder ein maximales Wettbewerbsfenster beinhalten.

**7.** Vorrichtung nach Anspruch 6, wobei die EDCA-Parameter durch einen Versuch erhalten werden, der zumindest entweder den AIFS pro Zugriffskategorie oder das minimale Wettbewerbsfenster oder das maximale Wettbewerbsfenster ändert.

**8.** Vorrichtung nach einem der vorstehenden Ansprüche, wobei die Parameterabrufeinheit (440) in der Speichereinheit (430) gespeicherte Basis-EDCA-Parameter abruft, falls keine EDCA-Parameter vorhanden sind, die den durch Bezugnehmen auf die empfangenen Informationen ausgewählten Abrufinformationen entsprechen.

**9.** Vorrichtung zur Bereitstellung verbesserter drahtloser Kommunikationen, wobei die Vorrichtung **gekennzeichnet ist durch**:

eine Verkehrsinformationen-Empfangseinheit (510), eingerichtet zum Empfangen von Informationen, die zumindest entweder eine Anzahl an Stationen (320) pro Zugriffskategorie oder eine Verkehrslast in Echtzeit beinhalten;
eine Parameterauswahleinheit (520), eingerichtet zum Auswählen zeitweiliger EDCA-(Enhanced Distributed Channel Access)-Parameter;
einen Netzwerksimulator (530), eingerichtet zum Erzeugen von Simulationsstationen, die den empfangenen Informationen entsprechenden Verkehr erzeugen werden, und zum Simulieren von Kommunikationsdurchsatz der Simulationsstationen **durch** Anwenden der ausgewählten zeitweiligen EDCA-Parameter auf die Simulationsstationen;
eine Parameterextraktionseinheit (540), eingerichtet zum Extrahieren von EDCA-Parametern aus den ausgewählten zeitweiligen EDCA-Parametern **durch** Bezugnehmen auf die Simulationsergebnisse; und
eine Parameterspeichereinheit (550), eingerichtet zum Speichern der extrahierten EDCA-Parameter.

**10.** Vorrichtung nach Anspruch 9, wobei die zeitweiligen EDCA-Parameter und die EDCA-Parameter zumindest entweder einen Arbitration Inter-Frame Space (AIFS) pro Zugriffskategorie oder ein minimales Wettbewerbsfenster oder ein maximales Wettbewerbsfenster beinhalten.

**11.** Verfahren zur Bereitstellung verbesserter drahtloser Kommunikationen, wobei das Verfahren **gekennzeichnet ist durch**:

Speichern von EDCA-(Enhanced Distributed Channel Access)-Parametern und vorgegebenen Verkehrsinformationen, die den EDCA-Parametern entsprechen;
Empfangen von Informationen, die zumindest entweder Zugriffskategorien von Daten, die aus jeder mit einem Netzwerk verbundenen Station (320) zu senden sind, oder eine Verkehrslast in Echtzeit beinhalten;
Abrufen von EDCA-(Enhanced Distributed Channel Access)-Parametern, welche **durch** Bezugnehmen auf die empfangenen Informationen ausgewählten Abrufinformationen entsprechen; und
Senden der abgerufenen EDCA-Parameter an zumindest eine Station (320), die mit dem drahtlosen Netzwerk verbunden ist.

**12.** Verfahren nach Anspruch 11, wobei der Verkehr in Echtzeit zumindest entweder Videoverkehr oder Sprachverkehr beinhaltet.

**13.** Verfahren nach Anspruch 11 oder 12, wobei der Verkehr in Nicht-Echtzeit zumindest entweder Hintergrundverkehr oder Verkehr nach bester Möglichkeit (best effort) beinhaltet.

**14.** Verfahren nach Anspruch 11, 12 oder 13, wobei die Abrufinformationen zumindest entweder die Anzahl an Stationen (320) pro Zugriffskategorie oder eine Verkehrslast in Echtzeit beinhalten.

**15.** Verfahren nach Anspruch 14, wobei die Zugriffskategorie zumindest entweder Nicht-Echtzeit oder Video oder Sprache beinhaltet.

**16.** Verfahren nach einem der Ansprüche 11 bis 15, wobei die EDCA-Parameter zumindest entweder einen Arbitration Inter-Frame Space (AIFS) pro Zugriffskategorie oder ein minimales Wettbewerbsfenster oder ein maximales Wettbewerbsfenster beinhalten.

17. Verfahren nach Anspruch 16, wobei die EDCA-Parameter mittels eines Versuchs erhalten werden, der zumindest entweder den AIFS pro Zugriffskategorie oder das minimale Wettbewerbsfenster oder das maximale Wettbewerbsfenster ändert.

18. Verfahren nach einem der Ansprüche 11 bis 17, wobei das Abrufen der EDCA-Parameter das Abrufen gespeicherter EDCA-Parameter beinhaltet, falls keine EDCA-Parameter vorhanden sind, die den durch Bezugnehmen auf die empfangenen Informationen ausgewählten Abrufinformationen entsprechen.

19. Verfahren zur Bereitstellung verbesserter drahtloser Kommunikationen, das **gekennzeichnet ist durch**:

Empfangen von Informationen, die zumindest entweder eine Anzahl an Stationen (320) pro Zugriffskategorie oder eine Verkehrslast in Echtzeit beinhalten;
Auswählen zeitweiliger EDCA-(Enhanced Distributed Channel Access)-Parameter;
Erzeugen von Simulationsstationen, die den empfangenen Informationen entsprechenden Verkehr erzeugen werden, und Simulieren von Kommunikationsdurchsatz der Simulationsstationen **durch** Anwenden der ausgewählten zeitweiligen EDCA-Parameter auf die Simulationsstationen, um Simulationsergebnisse zu erhalten;
Extrahieren von EDCA-Parametern aus den ausgewählten zeitweiligen EDCA-Parametern **durch** Bezugnehmen auf die Simulationsergebnisse; und
Speichern der extrahierten EDCA-Parameter.

20. Verfahren nach Anspruch 19, wobei die zeitweiligen EDCA-Parameter und die EDCA-Parameter zumindest entweder einen Arbitration Inter-Frame Space (AIFS) pro Zugriffskategorie oder ein minimales Wettbewerbsfenster oder ein maximales Wettbewerbsfenster beinhalten.

**Revendications**

1. Appareil permettant une communication sans fil améliorée, l'appareil étant **caractérisé par** :

une unité de stockage (430) agencée pour stocker des paramètres EDCA (Enhanced Distributed Channel Access) et des informations de récupération prédéterminées correspondant aux paramètres EDCA ;
une unité de réception (410) agencée pour recevoir des informations comprenant au moins un élément parmi des catégories d'accès de données destinées à être transmises par chaque station (320) reliée à un réseau et une charge de trafic en temps réel ;
une unité de récupération de paramètres (440) agencée pour récupérer les paramètres EDCA correspondant aux informations de récupération sélectionnés en référence aux informations reçues ; et
une unité de transmission (450) agencée pour transmettre les paramètres EDCA récupérés à destination d'au moins une station (320) reliée au réseau sans fil.

2. Appareil selon la revendication 1, dans lequel le trafic en temps réel comprend au moins un élément parmi un trafic vidéo et un trafic vocal.

3. Appareil selon la revendication 1 ou 2, dans lequel le trafic en temps non réel comprend au moins un élément parmi un trafic d'arrière plan et un trafic de meilleur effort.

4. Appareil selon la revendication 1, 2 ou 3, dans lequel les informations de récupération comprennent au moins un élément parmi le nombre de stations (320) par catégorie d'accès et une charge de trafic en temps réel.

5. Appareil selon la revendication 4, dans lequel la catégorie d'accès comprend au moins un élément parmi temps non réel, vidéo et voix.

6. Appareil selon l'une quelconque des revendications, dans lequel les paramètres EDCA comprennent au moins un élément parmi un espace intertrame d'arbitrage (AIFS) par catégorie d'accès, une fenêtre de contention minimale, et une fenêtre de contention maximale.

7. Appareil selon la revendication 6, dans lequel les paramètres EDCA résultent d'une expérience modifiant au moins un élément parmi l'AIFS par catégorie d'accès, la fenêtre de contention minimale, et la fenêtre de contention maximale.

8. Appareil selon l'une quelconque des revendications précédentes, dans lequel l'unité de récupération de paramètre (440) récupère des paramètres EDCA de base stockés dans l'unité de stockage (430) s'il n'existe pas de paramètres EDCA correspondant aux informations de récupération sélectionnés en référence aux informations reçues.

9. Appareil permettant une communication sans fil améliorée, l'appareil étant **caractérisé par** :

une unité de réception d'informations de trafic (510) agencée pour recevoir des informations comprenant au moins un élément parmi un nombre de stations (320) par catégorie d'accès et une charge de trafic en temps réel ;
une unité de sélection de paramètres (520) agencée pour sélectionner des paramètres EDCA (Enhanced Distributed Channel Access) temporaires ;
un simulateur de réseau (530) agencé pour générer des stations de simulation destinées à générer un trafic correspondant aux informations reçues et à simuler un débit de communication des stations de simulation en appliquant aux stations de simulation les paramètres EDCA temporaires sélectionnés ;
une unité d'extraction de paramètres (540) agencée pour extraire des paramètres EDCA parmi les paramètres EDCA temporaires sélectionnés, en référence aux résultats de simulation ; et
une unité de stockage de paramètres (550) agencée pour stocker les paramètres EDCA extraits.

10. Appareil selon la revendication 9, dans lequel les paramètres EDCA temporaires et les paramètres EDCA comprennent au moins un élément parmi un espace intertrame d'arbitrage (AIFS) par catégorie d'accès, une fenêtre de contention minimale, et une fenêtre de contention maximale.

11. Procédé permettant une communication sans fil améliorée, le procédé étant **caractérisé par** :

le stockage de paramètres EDCA (Enhanced Distributed Channel Access) et d'informations de trafic prédéterminées correspondant aux paramètres EDCA ;
la réception d'informations comprenant au moins un élément parmi des catégories d'accès de données destinées à être transmises par chaque station (320) reliée à un réseau et une charge de trafic en temps réel ;
la récupération des paramètres EDCA (Enhanced Distributed Channel Access) correspondant aux informations de récupération sélectionnés en référence aux informations reçues ; et
la transmission des paramètres EDCA récupérés à destination d'au moins une station (320) reliée au réseau sans fil.

12. Procédé selon la revendication 11, dans lequel le trafic en temps réel comprend au moins un élément parmi un trafic vidéo et un trafic vocal.

13. Procédé selon la revendication 11 ou 12, dans lequel le trafic en temps non réel comprend au moins un élément parmi un trafic d'arrière plan et un trafic de meilleur effort.

14. Procédé selon la revendication 11, 12 ou 13, dans lequel les informations de récupération comprennent au moins un élément parmi le nombre de stations (320) par catégorie d'accès et une charge de trafic en temps réel.

15. Procédé selon la revendication 14, dans lequel la catégorie d'accès comprend au moins un élément parmi temps non réel, vidéo et voix.

16. Procédé selon l'une quelconque des revendications 11 à 15, dans lequel les paramètres EDCA comprennent au moins un élément parmi un espace intertrame d'arbitrage (AIFS) par catégorie d'accès, une fenêtre de contention minimale, et une fenêtre de contention maximale.

17. Procédé selon la revendication 16, dans lequel les paramètres EDCA résultent d'une expérience modifiant au moins un élément parmi l'AIFS par catégorie d'accès, la fenêtre de contention minimale, et la fenêtre de contention maximale.

18. Procédé selon l'une quelconque des revendications 11 à 17, dans lequel ladite récupération des paramètres EDCA comprend la récupération des paramètres EDCA stockés s'il n'existe pas de paramètres EDCA correspondant aux informations de récupération sélectionnés en référence aux informations reçues.

**19.** Procédé permettant une communication sans fil améliorée, **caractérisé par** :

la réception d'informations comprenant au moins un élément parmi un nombre de stations (320) par catégorie d'accès et une charge de trafic en temps réel ;

la sélection de paramètres EDCA (Enhanced Distributed Channel Access) temporaires ;

la génération de stations de simulation destinées à générer un trafic correspondant aux informations reçues et simulant un débit de communication des stations de simulation en appliquant aux stations de simulation les paramètres EDCA temporaires sélectionnés, pour fournir des résultats de simulation ;

l'extraction des paramètres EDCA parmi les paramètres EDCA temporaires sélectionnés en référence aux résultats de simulation ; et

le stockage des paramètres EDCA extraits.

**20.** Procédé selon la revendication 19, dans lequel les paramètres EDCA temporaires et les paramètres EDCA comprennent au moins un élément parmi un espace intertrame d'arbitrage (AIFS) par catégorie d'accès, une fenêtre de contention minimale, et une fenêtre de contention maximale.

FIG. 1 (Related Art)

FIG. 2 (Related Art)

FIG. 3

FIG. 4

16

FIG. 5

520
PARAMETER
SELECTION UNIT

510
TRAFFIC
ENVIRONMENT
RECEIVING UNIT

NETWORK
SIMULATOR

530

540
PARAMETER
EXTRACTION UNIT

550
PARAMETER
STORAGE UNIT

EP 1 737 165 B1

17

FIG. 6

Latency of RT traffics(msec)   2 RT-traffic(1Mbps each), 5 BE-traffic(2Mbps each)

Throughput (Mb/s)

FIG. 7

```
        ┌─────────────┐
        │    START    │
        └──────┬──────┘
               │
               ▼
┌──────────────────────────────────┐
│   RECEIVE TRAFFIC INFORMATION     │────  S710
└──────────────┬───────────────────┘
               │
               ▼
┌──────────────────────────────────┐
│   ANALYZE TRAFFIC ENVIRONMENT     │────  S720
└──────────────┬───────────────────┘
               │
               ▼
┌──────────────────────────────────┐
│  RETRIEVE OPTIMIZED EDCA PARAMETER │────  S730
└──────────────┬───────────────────┘
               │
               ▼
┌──────────────────────────────────┐
│  TRANSMIT RETRIEVED EDCA PARAMETER │────  S740
└──────────────┬───────────────────┘
               │
               ▼
        ┌─────────────┐
        │     END     │
        └─────────────┘
```

FIG. 8

START

RECEIVE TRAFFIC INFORMATION — S810

SELECT TEMPORARY EDCA PARAMETER — S820

SIMULATE COMMUNICATION THROUGHPUT — S830

EXTRACT OPTIMIZED EDCA PARAMETER — S840

STORE EXTRACTED EDCA PARAMETER — S850

END

**EP 1 737 165 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Scarpa V et al.** Adaptive Techniques to Guarantee QoS in an IEEE 802.11 Wireless LAN. *IEEE 59th Vehicular Technology Conference,* 17 May 2004, 3014-3018